# EUROPÄISCHE PATENTANMELDUNG

(11) **EP 1 223 410 A2**
(43) Veröffentlichungstag der Anmeldung: **17.07.2002**
(21) Anmeldenummer: 01127997.3
(22) Anmeldetag: 24.11.2001
(51) Int. Cl.: G01D 5/14, F02D 11/10

(54) **Steuereinrichtung für ein Stellorgan**

(30) Priorität: 11.01.2001 DE 10100966
(71) Anmelder: Pierburg Aktiengesellschaft, 41460 Neuss (DE)
(72) Erfinder: Bürger, Frank, 52355 Dürren (DE); Ludwig, Norbert, 41379 Brüggen (DE)
(74) Vertreter: Dietrich, Barbara

(57) **Zusammenfassung**

Die Erfindung betrifft eine Steuereinrichtung für ein Stellorgan.

Bekannte Meßeinrichtungen werden häufig zur Ermittlung der Stellung eines Stellorgans, beispielsweise einer Drosselklappe, verwendet. Hierbei wird mit Hilfe eines Dauermagneten, der auch ein Diametralmagnet (3) sein kann, und eines HallSensors eine kontaktlose Meßeinrichtung geschaffen. Der Dauermagnet ist dabei über eine Welle mit dem Stellorgan verbunden.

Die vorliegende Lösung beschreibt eine Steuereinrichtung, bei der ein Motor (5) das Stellorgan (21) verstellt und durch wenigstens einen Hall-Schalter (4) diese Verstellung abgeschaltet wird, wenn das Stellorgan (21) die gewünschte Position eingenommen hat. Mit dieser einen Einrichtung, die zudem modular ausgeführt ist, können auch mehrere Stellorgane (11 bis 14) gleichzeitig verstellt werden. Die Übertragung der Verstellung erfolgt vorzugsweise über wenigstens ein Zahnrad (8), so daß einfache Motoren (5) verwendet werden können.

## Beschreibung

Die Erfindung betrifft eine Steuereinrichtung für ein Stellorgan.

Stellorgane werden insbesondere in Fahrzeugen, wie Kraftfahrzeugen, Flugzeugen, Schiffen usw. verwendetet, um beispielsweise Drosselklappen verstellen zu können.

Eine Meßeinrichtung zur Ermittlung der Stellung eines Stellorgans, beispielsweise einer Drosselklappe, offenbart die DE 199 15 988 A1. Hierbei wird mit Hilfe eines Dauermagneten, der auch ein Diametralmagnet sein kann, und eines Hall-Sensors eine kontaktlose Meßeinrichtung geschaffen. Der Dauermagnet ist dabei über eine Welle mit dem Stellorgan verbunden. Zur Steuerung für ein Stellorgan ist eine derartige Meßeinrichtung nicht nutzbar.

Die Aufgabe der Erfindung liegt darin, eine Steuereinrichtung für ein Stellorgan aufzuzeigen, welche berührungslos arbeitet und insbesondere eine verschleißfreie Erfassung der Endlagen des Stellorgans ermöglicht.

Gelöst wird die Aufgabe durch die Merkmale des Patentanspruchs 1.

Dabei liegt der Erfindung die Idee zugrunde, die Steuereinrichtung mit Hilfe eines am Umfang oder auf der Fläche mehrpoligen Magneten und wenigstens einem Hall-Schalter aufzubauen. Der Magnet ist über einer Welle mit einem oder sogar mehreren Stellorganen verbunden. Der Magnet weist an seinem Umfang oder Fläche wenigstens zwei, vorzugsweise jedoch mehrere verschieden gepolte Segmente auf, die den wenigstens einen Hall-Schalter beeinflussen. Angesteuert wird die Welle des Stellorgans von einem Motor. Über den Hall-Schalter erfolgt die Rückmeldung, wenn das Stellorgan die gewünschte, einzustellende Position eingenommen hat, wodurch der Motor abgeschaltet wird. Diese Information erhält der Hall-Schalter durch den Magneten.

Vorteilhafte Ausführungen sind in den Unteransprüchen aufgezeigt.

So kann diese Steuereinrichtung zur Steuerung von mehreren gleichzeitig zu verstellenden Stellorganen, beispielsweise von Drallklappen, verwendet werden. Dabei wirken die Stellorgane synchron miteinander, wozu sie zwangsgeführt werden. Für diese Ausführung ist nur ein segmentierter Magnet notwendig, der auf einer Welle eines der Stellorgane aufgebracht ist und mit dem wenigsten einen Hall-Schalter zusammenwirkt.

Dem Magnet können umfangsseitig auch beispielweise zwei, um 90° versetzt zueinander angeordnete, oder mehrere Hall-Schalter zugeordnet werden, wodurch sich die Genauigkeit der Erkennung einer Polungsumkehrung am segmentierten Magneten erhöht.

Um einfache Motore verwenden zu können, wird eine Übersetzung zwischen der Welle des Stellorgans und dem Motor eingebaut. In der einfachen Ausführung ist dies beispielsweise ein Zahnrad, in der komplexeren Ausführung beispielsweise eine Schnecke mit Zahnrad, wobei die Wellen mehrerer Stellorgane über bewegliche Hebel mit einer mit der Schnecke verbundenen zentralen Welle beweglich verbunden sind.

In vorteilhafter Art und Weise wird die Steuereinrichtung in ihrer Gesamtheit modulartig ausgeführt, wodurch diese leichter in ein Stellorgan integriert werden kann. Dadurch ist, je nach Kundenwunsch, ein Austausch mit einer als Regeleinrichtung bzw. einer als Meßeinrichtung ausgeführten Steuereinrichtung möglich. Diese Meßeinrichtungen bestehen im allgemeinen aus einem Diametralmagneten, einem Hall-Sensor anstelle des Hall-Schalters und einer anderen Leiterplatine, die bekanntlich mit anderen Bauelementen bestückt ist. Von Vorteil ist dabei, daß die aufgezählten Einrichtungen jeweils eine gleiche Schnittstellenanzahl aufweisen.

Anhand von Ausführungsbeispielen mit Zeichnung soll die Erfindung näher erläutert werden. Der Fachmann wird die Merkmale diesen Ausführungen entnehmen und diese zweckmäßigerweise auch einzeln betrachten und zu sinnvollen weiteren Kombinationen zusammenfassen.

Es zeigt
- Fig. 1: eine als Schaltung vereinfacht dargestellte Steuereinrichtung mit einem vierpoligen Ringmagneten und einem Hall-Schalter,
- Fig.2: ein modularer Einbau der Steuereinrichttung in einem Stellorgan,
- Fig.3 a) - c): eine Anordnung der modularen Steuereinrichtung für mehrere Stellorgane, sowie Darstellung dieser in unterschiedlichen Stellungen,
- Fig. 4: ein weiterer mehrfach segmentierter Magnet.

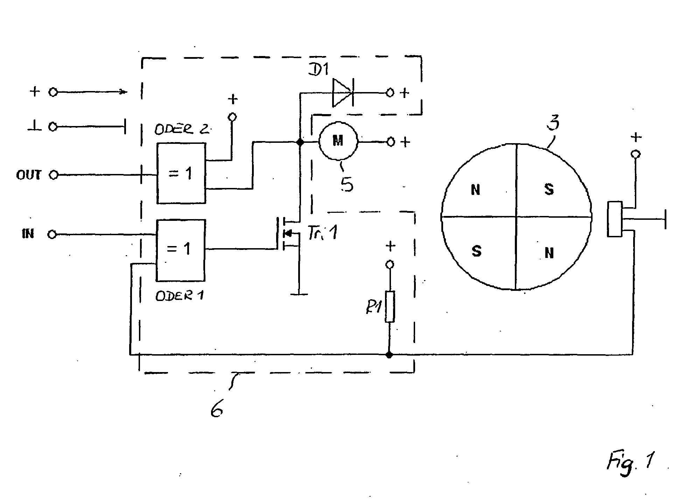

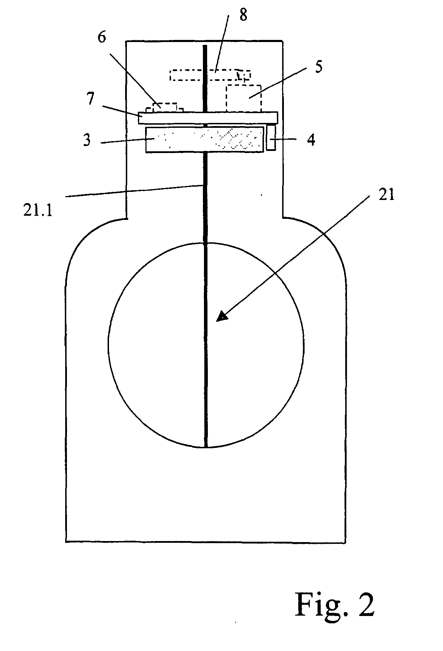

In Fig. 1 ist eine Steuereinrichtung für wenigstens ein Stellorgan 21 (siehe Fig.2) als Schaltungsanordnung vereinfacht dargestellt. Mit 3 ist ein Ringmagnet gekennzeichnet, dem ein Hall-Schalter 4 zugeordnet ist. Der Ringmagnet 3 ist hier vierpolig und symetrisch ausgeführt, wobei die verschiedenen Polungsübergänge N/S bzw. S/N verschiede Schaltpunkte für den Hall-Schalter 4 definieren. Ein Ausgang des Hall-Schalters 4 ist auf den Eingang eines ODER-Gliedes 1 geführt, dessen anderer Eingang von einem separaten Steuergerät ( nicht näher dargestellt) mit Signalen beaufschlagt wird. Das ODER-Glied 1 ist hierbei ein Exlusiv-ODER. Über den Widerstand R1 liegen der Hall-Schalter 4 als auch der mit dem Hall-Schalter 4 verbundene Eingang des ODER-Gliedes 1 am positiven Spannungspotential an. Mit dem Ausgang des ODER-Gliedes 1, ist ein Schalttransistor Tr.1 verschaltet, über den ein Motor 5 geschaltet bzw. getaktet wird. Ein mit dem Motor 5 verbundene Diode D1, die parallel und in Durchlaßrichtung geschaltet ist, dient zum Spannungsschutz des Tr. 1.

Das ODER-Glied 1 wirkt als Verbindungsglied , d.h. als Vergleicher zwischen den Signalen des separaten Steuergerätes und den Signalen des Hall-Schalter 4 für den Motor 5.
Mit Anliegen eines Stellsignals vom Steuergerät am ODER -Glied 1 schaltet das Exclusiv-ODER 1 nur dann durch, wenn zu diesem Zeitpunkt vom Hall-Schalter 4 ein inverses Signal geliefert wird. Mit Durchschaltung wird der Motor 5 über den Schalttransistor Tr.1 angesteuert, wobei der Motor 5 seinerseits durch Verstellung des mit dem Ringmagnet 3 verbunden Stellorgans 21 die Lage des vierpoligen Ringmagneten 3 zum Hall-Schalter 4 verstellt. Dabei verändert sich die Polungslage von beispielsweise N/S auf S/N des Ringmagneten 3 zum Hall-Schalter 4. Dies bewirkt, daß der Hall-Schalter 4 bei der Umpolungsphase , d.h. während der Polungsübergänge, schaltet und ein entsprechendes Signal an das ODER-Glied 1 gelangt, wodurch der Motor 5 abgeschaltet wird.
Bei Anliegen eines neuen Stellsignals vom Steuergerät wiederholt sich diese Prozedur, wobei der Hall-Schalter 4 erneut schaltet und dieser ein neues Signal an das ODER-Glied 1 gibt und der Motor 5 abgeschaltet wird. Das Exclusiv-ODER 1 bewirkt somit, daß trotz zweier unterschiedlicher Signale bzw. Schaltzustände (High, Low) des Hall-Schalters 4 der Motor 5 immer abgeschaltet werden kann. Insbesondere bei einem Neustart entfällt in vorteilhafter Art und Weise eine Abfrage des Schaltzustandes des Hall-Schalter 4 und damit eine Abfrage der aktuellen Stellung des Stellorgans.

Durch den segmentiert gestalteten Ringmagneten 3 ist es möglich, das Stellorgan 21 durchdrehbar (360°) und in eine Richtung verstellen zu können.

In einer besonderen Variante zeigt Fig.1 zusätzlich ein weiteres Oder-Glied 2, welches eingangsseitig mit dem Drain-Anschluß des Schalttransistors Tr.1 und dem Motoreingang des Motors 5 sowie mit der Diode D1 verbunden. Ein weiterer Eingang ist mit einem ein konstantes Vergleichssignal liefernden Signalpfad verbunden. Der Ausgang des ODER-Gliedes 2 ist hierbei als Ausgang für eine Fehlermeldung vorgesehen. Mit dieser Maßnahme kann zusätzlich eine sogenannte On-Board-Diagnose durchgeführt werden, wobei bei Fehlverhalten der Steuerung, z.B. des Motors 5, des Magneten 3 und/oder des Hall-Schalters 4 usw. ein konstanter, diesen Fehler definierender Signalpegel, beispielsweise "high" an den Ausgang "OUT" gelegt wird.

In Fig. 2 ist eine Anwendung der Steuereinrichtung aus Fig. 1 in bzw. an einem Stellorgan 21 ( vereinfacht und leicht vergrößert) aufgezeigt. Der Einfachheit halber sind die vorgenannten, elektrischen Bauelemente, mit Ausnahme des Hall-Schalters 4, mit 6 gekennzeichnet, die beispielsweise in SMD-Technik gefertigt und sich wie der Hall-Schalter 4 auf einer Leiterplatine 7 befinden. Die Leiterplatine 7 ist vorzugsweise oberhalb des Ringmagneten 3 angeordnet. Der Ringmagnet 3 ist an einer Welle 21.1 des Stellorgans 21 angebracht. In direkte Nähe zum Ringmagnet 3 befindet sich der Hall-Schalter 4. Dabei verstellt der Motor 5 das Stellorgan 21 solange, bis vom Hall-Schalter 4, wie bereits beschrieben, ein Abschaltsignal ausgegeben wird.

Über ein Zahnrad 8, welches mit der Welle 21.1 direkt verbunden ist, kann die Drehbewegung des Motors 5 übersetzt auf das Stellorgan 21 übertragen werden. Durch diese Maßnahme können einfache und kostengünstige Motore eingesetzt werden.

Die Steuereinrichtung ist zudem vorzugsweise modulartig als Einheit ausgeführt, wodurch diese schnell auf die Welle 21.1 aufbringbar und leicht elektrisch verbindbar ist, was einen flexiblen Einsatz der Einheit ermöglicht.

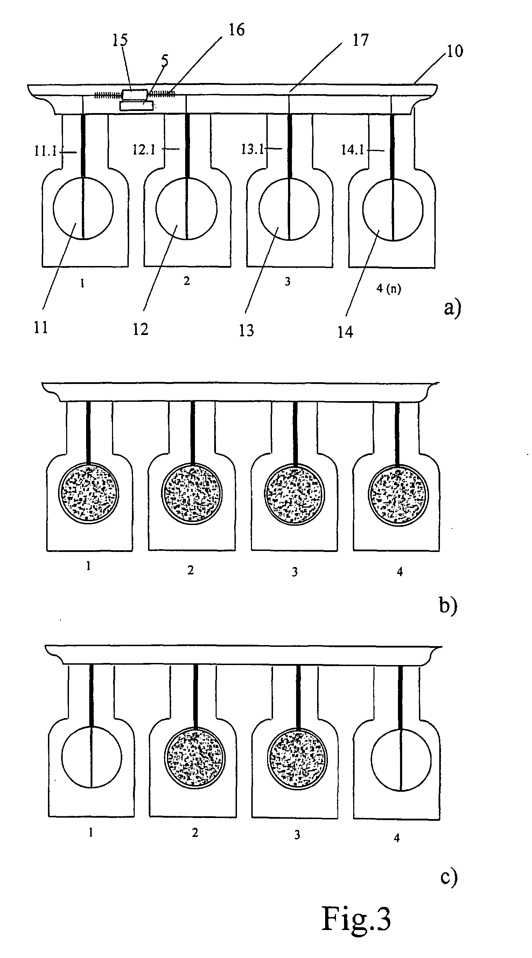

In einem weiteren Ausführungsbeispiel nach Fig. 3 a) - c) sind mehrere, synchron miteinander verstellbare Stellorgane 11 bis 14 in einem gemeinsamen Gehäuse 10 integriert. Diese Stellorgane 11.1 bis 14.1, beispielsweise mehrere Drallklappen eines nicht näher dargestellten Saugrohres, nehmen in diesem Ausführungsbeispiel zwei Zustände ein, entweder "Voll-Auf" oder "Voll-Zu". Dazu müssen die Klappen gemeinsam jeweils um 90° verstellt werden. In der Praxis werden derartige Klappen 11 bis 14 zwangsgeführt, um eine gleichzeitige Verstellung zu gewährleisten. Vorzugsweise wird hierbei nur ein vierpoliger Ringmagnet 3 (Fig.1) sowie eine Steuereinrichtung mit einem Hall-Schalter 4 verwendet. Dazu ist der vierpolige Ringmagnet 3 auf der Welle 11.1 der ersten Klappe 11 angeordnet. Über ein Zahnrad 15 und eine Schnecke 16 ( siehe Fig.3a) wird die Motorbewegung des vorzugsweise einen Motors 5 auf die Wellen 11.1 bis 14.1 gleichmäßig übertragen. Die bewegliche Übertragung auf die Wellen 11.1 bis 14.1 erfolgt durch Hebel (nicht dargestellt), die einerseits jeweils mit einer der Wellen 11.1 bis 14.1 und andererseits mit der zentralen Welle 16.1 verbunden sind. Auf der zentralen Welle 16.1 befindet sich die Schnecke 16.

Auch für zwangsgeführte Stellorgane 11 bis 14, die gegensinnig verstellt werden, wie in fig. 3 c) dargestellt, ist die vorgenannte Lösung anwendbar.

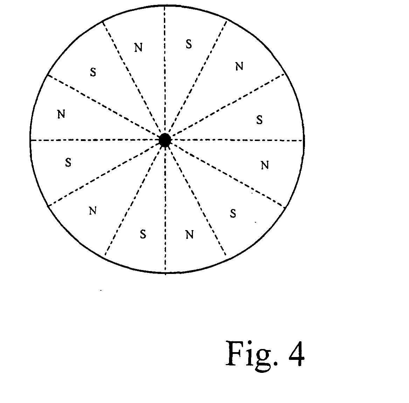

Ist das Stellorgan 21 bzw. sind die Stellorgane 11 bis 14 in kleineren Winkeln als 90° zu verstellen, ist ein Magnet 30 mit feineren Segmentierungen, wie in Fig. 4 dargestellt, einzusetzten. Durch das dabei entstehende feinere Raster werden mehr Polungsübergänge S/N , N/S geschaffen, wodurch ein häufigeres Schalten des Hall-Schalter 4 bewirkt wird. D.h., je feiner die Stellorgane 11 bis 14, 21 verstellt werden sollen, desto feiner ist die Segmentierung des Ringmagneten 3, 30 zu gestalten.

Es versteht sich, daß in Rahmen des Erfindungsgedankens Änderungen möglich sind, z.B. kann anstelle eines mehrpoligen radialen Ringmagneten auch ein mehrpoliger, axialer Magnet (nicht näher dargestellt) verwendet werden.

## Patentansprüche

1. Steuereinrichtung für ein Stellorgan, welches mit einer Welle verbunden ist, die von einem Motor zur Winkelverstellung des Stellorgans abgetrieben wird, **dadurch gekennzeichnet, daß**
- ein segmentierter Magnet (3, 30) auf der Welle (21.1) des Stellorgans (21) angebracht ist, dem
- wenigstens ein Hall-Schalter (4) derart zugeordnet ist, daß dieser
- bei Verstellung des Magneten (3) einen Polübergang (N/S, S/N) detektiert und
- den Motor (5) abschaltet.

2. Steuereinrichtung für mehrere Stellorgane, die mit je einer Wellen verbunden sind und über diese verstellt werden, **dadurch gekennzeichnet, daß**
- die Stellorgane (11 bis 14) synchron und zwangsgeführt über einen gemeinsamen Motor (5) verstellt werden, wozu
- ein mehrpoliger Magnet (3, 30) an einer der Wellen (11.1 bis 14.1) befestigt ist, dem
- wenigstens ein Hall-Schalter (4) zugeordnet ist, der
- bei Verstellung des einen Magneten (3) einen Polübergang (N/S, S/N) detektiert und
- den gemeinsamen Motor (5) abschaltet,.

3. Steuereinrichtung nach Anspruch 1 oder 2, **dadurch gekennzeichnet, daß**
- die Segmentierung des Magneten (3) von der Anzahl der Verstellung des Stellorgans (21, 11 bis 14) abhängig ist.

4. Steuereinrichtung nach einem der Ansprüche 1 bis 3, **dadurch gekennzeichnet, daß**
- die Steuereinrichtung eingangsseitig einen Vergleicher (ODER1) aufweist, über den das Verstellsignal als auch das Abschaltsignal für den Motor (5) ausgegeben wird, wozu der andere Eingang des Vergleichers (ODER1) vom Hall-Schalter (4) beaufschlagt wird.

5. Steuereinrichtung nach einem der Ansprüche 1 bis 4, **dadurch gekennzeichnet, daß**
- die Steuereinrichtung zur Fehlermeldung ausgangsseitig einen weiteren Vergleicher (ODER2) aufweist, der eingangsseitig einerseits mit dem Motor (5) und einem weiteren, ein konstantes Vergleichssignal liefernden Signalpfad verbunden ist.

6. Steuereinrichtung nach einem der Ansprüche 1 bis 5, **dadurch gekennzeichnet, daß**
- der Magnet (3, 30) ein mehrpoliger Ringmagnet ist.
